(19) Europäisches Patentamt
European Patent Office
Office européen des brevets

(11) Veröffentlichungsnummer: **0 537 197 B1**

# (12) EUROPÄISCHE PATENTSCHRIFT

(45) Veröffentlichungstag der Patentschrift: **14.09.94**

(51) Int. Cl.[5]: **C07F 9/48**, C08K 5/49

(21) Anmeldenummer: **91911246.6**

(22) Anmeldetag: **19.06.91**

(86) Internationale Anmeldenummer:
**PCT/EP91/01123**

(87) Internationale Veröffentlichungsnummer:
**WO 92/00304 (09.01.92 92/02)**

## (54) VERFAHREN ZUR HERSTELLUNG VON PHOSPHONIGSÄURE-ARYLESTER- HALOGENIDEN.

(30) Priorität: **02.07.90 DE 4021194**

(43) Veröffentlichungstag der Anmeldung:
**21.04.93 Patentblatt 93/16**

(45) Bekanntmachung des Hinweises auf die Patenterteilung:
**14.09.94 Patentblatt 94/37**

(84) Benannte Vertragsstaaten:
**AT BE CH DE ES FR GB IT LI NL**

(56) Entgegenhaltungen:
**EP-A- 0 004 026**

(73) Patentinhaber: **HOECHST AKTIENGESELL-SCHAFT**

**D-65926 Frankfurt (DE)**

(72) Erfinder: **BÖHSHAR, Manfred**
**Im Förstergrund 14**
**D-6233 Kelkheim (DE)**
Erfinder: **KLEINER, Hans-Jerg**
**Altkönigstra e 11a**
**D-6242 Kronberg (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 537 197 B1

## Beschreibung

Die vorliegende Erfindung betrifft ein Verfahren zur Herstellung von Phosphonigsäure-arylester-halogeniden

Phosphonigsäure-arylester-halogenide sind wertvolle Zwischenprodukte, die beispielsweise als Ausgangsstoffe zur Synthese technisch interessanter Phosphonigsäure-ester-amide, wie sie beispielsweise in der EP-A-0 042359 beschrieben sind, oder Phosphonigsäure-diester Verwendung finden.

Zur Herstellung solcher Verbindungen ist man bislang von Phosphonigsäure-dihalogeniden ausgegangen, die beispielsweise mit molaren Mengen eines Alkohols in Gegenwart eines tertiären Amins umgesetzt werden (Houben-Weyl, "Methoden der organischen Chemie", Phosphorverbindungen E1, S. 285 (1982)).

Die Umsetzung von Phosphonigsäure-dihalogeniden mit Phenolen in Gegenwart von Triethylamin zu den entsprechenden Phenylphosphonigsäure-arylester-halogeniden ist in der EP-A-0 004 026 beschrieben.

Der schwerwiegende Nachteil dieser Verfahren liegt in der schwierigen Herstellung der als Vorprodukte benötigten Phosphonigsäure-dihalogenide, weshalb diese Methode auch keine industrielle Bedeutung erlangen konnte. Beispielsweise ist von den aromatischen Derivaten ausschließlich Phenyldichlorphosphan ein technisch verfügbares Produkt, durch das einzig Derivate der benzolphosphonigen Säure zugänglich werden.

Es bestand daher ein erhebliches Interesse für technisch günstigere Verfahren zur Herstellung von Phosphonigsäure-aryl-ester-halogeniden die derartige Nachteile nicht aufweisen.

Gegenstand der vorliegenden Erfindung ist ein Verfahren zur Herstellung von Phosphonigsäure arylester-halogeniden der Formel I (siehe Patentanspruch 1), in denen

$R^1$ einen Phenyl- oder Benzylrest, die 1 bis 3 Substituenten tragen, $\alpha$-Methylbenzyl, $\alpha,\alpha$-Dimethylbenzyl, Naphthyl oder einen 1 bis 5 Substituenten tragenden Naphthylrest darstellt, wobei die Substituenten gleich oder verschieden sind und einen nicht-aromatischen Kohlenwasserstoffrest, einen Alkoxyrest oder Alkylthiorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35,

$R^2$ einen nicht-aromatischen Kohlenwasserstoffrest mit 1 bis 18 Kohlenstoffatomen, Aryl, Arylmethyl, Aryläthyl oder Arylisopropyl ist, wobei das Aryl jeweils 6 bis 10 Kohlenstoffatome enthält,

$R^3$ Wasserstoff oder eine der unter $R^2$ genannten Gruppen, und

X Chlor oder Brom darstellt.

Es ist dadurch gekennzeichnet, daß man zunächst in erster Stufe ein Kohlenwasserstoffhalogenid $R^1$-Hal, worin $R^1$ die obengenannte Bedeutung hat, und dessen Halogen ein Atomgewicht von mindestens 35 hat, bevorzugt jedoch Brom ist, unter Grignard-Bedingungen, also zweckmäßig unter inniger Durchmischung, mit mindestens stöchiometrischen Mengen Magnesium zu den entsprechenden Grignard-Verbindungen $R^1$-Mg-Hal umsetzt und diese weiter in einer zweiten Stufe mit Phosphorigsäure-arylester-dihalogeniden der Formel II (s. Patentanspruch 4), worin die Reste $R^2$ und $R^3$ und X die vorgenannte Bedeutung haben, unter Bildung der Phosphonigsäure-arylester-halogenide I umsetzt.

Im Hinblick auf eine industrielle Herstellung sind naturgemäß Verbindungen mit X = Chlor besonders bevorzugt.

Darüberhinaus sind auch solche Verbindungen, in denen $R^1$ unsubstituiertes oder substituiertes Naphthyl ist, besonders bevorzugt.

In den Verbindungen der Formel I bedeutet $R^1$ z.B. einen Phenyl- oder Benzylrest, die 1 bis 3 Substituenten tragen, wie den $C_1$-$C_8$-Alkyl, $C_1$-$C_8$-Alkoxy, $C_1$-$C_8$-Alkylthiorest, wie die unter $R^2$ im einzelnen genannten Alkylreste mit 1 bis 8 Kohlenstoffatomen und die entsprechenden Alkoxy- und Alkylthioreste, oder $C_5$-$C_8$-Cycloalkyl, Phenyl, Phenoxy und/oder Halogen. Im einzelnen seien genannt die Tolyl-, Dimethylphenyl-, Trimethylphenyl-, tert.-Butylphenyl-, Anisyl-, Naphthylreste, die noch bis zu 2 Alkyl-C-Atome tragen können, sowie die verschiedenen Biphenylreste, Benzyl, $\alpha$-Methylbenzyl und $\alpha,\alpha$-Dimethylbenzyl. Naturgemäß können die Substituenten in $R^1$ nur in einer solchen Weise kombiniert werden, daß keine sterische Hinderung auftritt. Sofern $R^1$ 3 Substituenten enthält, sollten in den beiden o-Stellungen zusammen nicht über 5 Kohlenstoffatome enthalten sein.

Als Reste $R^2$ eignen sich z.B. nicht-aromatische Kohlenwasserstoffreste mit 1 bis 18 Kohlenstoffatomen, wie Alkyl oder Cycloalkyl, ferner aromatische Reste, die einschließlich aliphatischer Gruppen 6 bis 18 Kohlenstoffatome aufweisen, wobei nicht mehr als 10 Kohlenstoffatome Teil eines aromatischen Ringsystems sind. Bevorzugt enthalten die Reste $R^2$ 4 bis 12 und insbesondere 6 bis 10 Kohlenstoffatome. Im einzelnen eignen sich als nicht-aromatische Kohlenwasserstoffreste Alkyl wie Methyl, Äthyl, die verschiedenen Propyl-, Butyl-, Pentyl-, Hexyl-, Octyl-, Decyl-, Dodecyl-, Hexadecyl-, und Octadecylreste, und Cycloalkyl mit 5 bis 10 Kohlenstoffatomen wie Cyclopentyl, Cyclohexyl, Cycloheptyl und Cyclohexylmethyl (d.i. sowohl der hydrierte Benzylrest als auch der Methylcyclohexylrest); ferner seien genannt $C_6$-$C_{10}$-Aryl und

Arylmethyl, wobei der Begriff Aryl jeweils Alkylaryl einschließt, höchstens drei der unter $R^1$ genannten Substituenten trägt und, diese eingeschlossen, höchstens 14 Kohlenstoffatome hat.

Wenn der Rest $R^2$ einen Alkylrest bedeutet, sind tertiäre Alkylreste mit 4-10 Kohlenstoffatomen, wie tert.-Butyl, 2-Methyl-2-butyl, 2-Methyl-2-pentyl, 2-Äthyl-2-butyl besonders bevorzugt. Andere bevorzugte Verbindungen sind die, in denen $R^2$ Phenyl, Benzyl, $\alpha$-Methylbenzyl sowie $\alpha,\alpha$-Dimethylbenzyl ist.

Die erste Stufe des erfindungsgemäßen Verfahrens, die man an sich in jeder üblichen Weise durchführen kann, wird bevorzugt in einem aprotischen, organischen Lösungsmittel wie einem Äther, z.B. Diäthyl-, Dipropyl- oder Diisopropyläther, Äthylenglykoldimethyl- oder -äthyläther, Diäthylenglykoldimethyl- oder äthyläther, Methyl-tert.-butyläther, Dioxan oder Tetrahydrofuran durchgeführt.

Da die Grignard-Verbindungen sowie die Ausgangs- und Endstoffe hydrolyse- und oxydationsempfindlich sind, kann es zweckmäßig sein, unter Schutzgasatmosphäre zu arbeiten. Ein solches Vorgehen ist jedoch für das Gelingen der Reaktion keineswegs zwingend. Als Schutzgas besonders geeignet sind Stickstoff und Argon. Die Reaktionstemperatur liegt im allgemeinen zwischen 20 und 125 °C, bevorzugt jedoch zwischen 30 und 70 °C.

Zur Herstellung der Phosphonigsäure-arylester-halogenide I wird in der zweiten Stufe die Lösung bzw. Suspension der Grignard-Verbindung unter inniger Durchmischung zu dem Phosphorigsäure-arylester-dihalogenid II, das vorteilhaft mit einem inerten, aprotischen Lösungsmittel, z.B. Hexan, Toluol, Xylol oder einem der obengenannten Äther verdünnt ist, zudosiert. Die Reaktionstemperatur liegt bei diesem Schritt im allgemeinen zwischen -40 und +30 °C, vorzugsweise aber zwischen -30 und 0 °C. Die Umsetzung verläuft in der Regel exothem; dementsprechend kann es zweckmäßig sein, den Reaktionsverlauf durch Kühlung zu steuern. Die günstigsten Ergebnisse werden erzielt, wenn man die Reaktionspartner in den stöchiometrischen Mengen einsetzt. Es ist jedoch auch möglich, einen Reaktionspartner im Überschuß einzusetzen; im allgemeinen sind damit aber keine besonderen Vorteile verbunden.

Zweckmäßig wird gerührt, bis die Umsetzung vollständig ist, und anschließend vom ausgefallenen Magnesiumhalogenid abgetrennt. Die Lösungsmittel können aus dem Filtrat in üblicher Weise, vorteilhaft destillativ, insbesondere unter vermindertem Druck, entfernt werden.

Die Synthese von Phosphonigsäure-ester-halogeniden durch Umsetzung von Phosphorigsäure-ester-dihalogeniden mit Grignardreagenzien ist bislang nicht bekannt. Offenbar bestand aufgrund der bekanntermaßen leichten Austauschbarkeit von an den Phosphor gebundenen Halogen- bzw. Estergruppen gegenüber solchen metallorganischen Nukleophilen ein Vorurteil dahingehend, daß auch bei der Umsetzung von Phosphorigsäure-ester-dihalogeniden mit nur einem Äquivalent Grignardreagenz in hohem Maße mit dem Ablauf ausbeutemindernder Neben- bzw. Folgereaktionen (Bildung von Phosphinigsäureestern sowie Phosphanen) und einer damit verbundenen niedrigen Ausbeute an gewünschtem Produkt zu rechnen sei (Houben-Weyl, "Methoden der organischen Chemie" Band 12/1, S. 210 (1963)). Vor diesem Hintergrund ist es besonders überraschend, daß nach dem Verfahren der vorliegenden Erfindung, ausgehend von leicht zugänglichen Phosphorigsäure-arylester-dihalogeniden, beliebig substituierte Phosphonigsäure-arylester-halogenide in einfacher Weise zugänglich gemacht werden können.

Die Verbindungen I eignen sich als Vorprodukte für spezielle Phosphonigsäurederivate, die in den älteren, nicht vorveröffentlichten Patentanmeldungen P 39 28 291.0 sowie P 39 16 502.7 beschrieben sind.

Die als Ausgangsstoffe verwendeten Phosphorigsäure-arylester-dihalogenide II sind entweder bekannt oder entsprechend der nicht vorveröffentlichten Anmeldung P 39 28 291.0 oder in einfacher Weise analog aus $PHal_3$ und dem betreffenden Phenol herstellbar.

## Beispiele

### Allgemeine Vorschrift zur Herstellung der Phosphonigsäure-arylester-halogenide

Unter Stickstoffatmosphäre und Feuchtigkeitsausschluß wurde aus 250 mmol Organobromverbindung und 250 mmol (= 6,1 g) Magnesiumspänen in 170 ml Tetrahydrofuran die entsprechende Grignardverbindung hergestellt. Die resultierende Lösung bzw. Suspension der metallorganischen Verbindung wurde anschließend innerhalb von 30 bis 40 Minuten bei ca. - 30 °C unter lebhaftem Rühren zur Lösung von 250 mmol des betreffenden Phosphorigsäure-arylester-dihalogenids in 160 ml n-Hexan/Tetrahydrofuran (4:1) zudosiert. Zur Vervollständigung der Reaktion rührte man noch 1 Stunde bei -20 bis -10 °C und weitere 4 Stunden bei Raumtemperatur nach. Nach Filtration vom Magnesiumsalz, das mit 100 ml n-Hexan nachgewaschen wurde, wurden die Lösungsmittel zunächst im Vakuum der Wasserstrahlpumpe und dann im Hochvakuum abdestilliert. Die rohen Reaktionsprodukte fielen als zähe Öle bzw. Harze an, die durch $^{31}P$-NMR Spektroskopie charakterisiert wurden. Im Falle der Umsetzungen von Phosphorigsäure-arylesterdichloriden mit Organo-magnesium-bromiden enthielten die Produkte neben dem betreffenden Phosphonigsäure-arylesterchlorid zuweilen als Nebenkomponente das analoge Bromid, dessen Bildung auf Halogenaustauschprozesse zurückzuführen ist; zur Herstellung von Stabilisatoren für Polymere können solche Gemische problemlos ohne weitere Reinigung eingesetzt werden.

Der Produktgehalt an Verbindung I (Gesamthalogenid: X = Chlor + X = Brom) lag im allgemeinen zwischen 80 und 98 % vom Gesamt Phosphor.

Zur chemischen Charakterisierung wurden in ausgewählten Fällen die Phosphonigsäure-arylesterhalogenide durch Folgeumsetzungen mit Aminen in Phosphonigsäure-arylesteramide bzw. mit Phenolen in Phosphonigsäure-diarylester umgewandelt, die bereits in den nicht vorveröffentlichten, DE-A- 3 928 291 und DE-A- 3 916 502 beschrieben sind.

1. 2,4,6-Trimethyl-1-phenyl-phosphonigsäure-2',4'-ditert.-butyl-phenyl-ester-chlorid/bromid: Ausgehend von 49,7 g Brommesitylen und 77 g Phosphorigsäure-2,4-di-tert.-butyl-phenylester-dichlorid wurden ca. 98 g eines gelben Harzes mit einem Gehalt von 78% -chlorid

$$[^{31}P\text{-NMR: } \delta_{CDCl_3} = 180{,}7 \text{ ppm}]$$

sowie 20% -bromid

$$[^{31}P\text{-NMR: } \delta_{CDCl_3} = 185{,}2 \text{ ppm}]$$

erhalten.
$C_{23}H_{32}ClOP$ (390,93); $C_{23}H_{32}BrOP$ (435,37)

2. 2,4,5-Trimethyl-1-phenyl-phosphonigsäure-2',4'-di-tert.-butyl-phenylester-chlorid/bromid: Ausgehend von 49,7 g 1-Brom-2,4,5-trimethylbenzol und 77 g Phosphorigsäure-2,4-di-tert.-butyl-phenylester-dichlorid wurden ca. 97 g eines gelben Harzes mit einem Gehalt von 69 %-chlorid

$$[^{31}P\text{-NMR: } \delta_{CDCl_3} = 170{,}5 \text{ ppm}],$$

sowie 21% -bromid

$$[^{31}P\text{-NMR: } \delta_{CDCl_3} = 175{,}1 \text{ ppm}]$$

erhalten. $C_{23}H_{32}ClOP$ (390,93); $C_{23}H_{32}BrOP$ (435,37)

3. 1-Naphthylphosphonigsäure-2',4'-di-tert.-butyl-phenylester-chlorid/bromid: Ausgehend von 51,8 g Bromnaphthalin und 77 g Phosphorigsäure-di-tert.-butyl-phenylester-dichlorid wurden ca. 100 g zähes Harz mit einem Gehalt von 64% -chlorid

$$[^{31}P\text{-NMR: } \delta_{CDCl_3} = 170{,}4 \text{ ppm}],$$

sowie 32% -bromid

$$[^{31}P\text{-NMR: } \delta_{CDCl_3} = 173{,}2 \text{ ppm}]$$

erhalten. $C_{24}H_{28}ClOP$ (398,90); $C_{24}H_{28}BrOP$ (443,35)

4. 2,5-Dimethyl-1-phenyl-phosphonigsäure-2',4'-di-tert.-butyl-phenylester-chlorid/bromid: Ausgehend von 46,3 g 1-Brom-2,5-dimethylbenzol und 77 g Phosphorigsäure2,4-di-tert.-butyl-phenylester-dichlorid wurden ca. 96 g gelbes Harz mit einem Gehalt von ca. 55% -chlorid

$$[^{31}P\text{-NMR: } \delta_{CDCl_3} = 169 \text{ ppm}],$$

sowie 25% -bromid

$$[^{31}P\text{-NMR: } \delta_{CDCl_3} = 173{,}0 \text{ ppm}]$$

erhalten.
$C_{22}H_{30}ClOP$ (376,90); $C_{22}H_{30}BrOP$ (421,35)

5. 2-Methyl-1-phenyl-phosphonigsäure-2',4'-di-tert.-butyl-phenylester-chlorid/bromid: Ausgehend von 42,8 g 2-Bromtoluol und 77 g Phosphorigsäure-2,4-di-tert.-butyl-phenylester-dichlorid wurden ca. 92 g gelbliches Harz mit einem Gehalt von 63% -chlorid

$$[^{31}P\text{-NMR: } \delta_{CDCl_3} = 168{,}3 \text{ ppm}]$$

sowie 22% -bromid

$$[^{31}P\text{-NMR: } \delta_{CDCl_3} = 172{,}3 \text{ ppm}]$$

erhalten.
$C_{21}H_{28}ClOP$ (362,88); $C_{21}H_{28}BrOP$ (407,32)

6. 2,4-Dimethyl-1-phenyl-phosphonigsäure-2',4'-di-tert.-butyl-phenylester-chlorid/bromid: Ausgehend von 46,3 g 1-Brom-2,4-dimethylbenzol und 77 g Phosphorigsäure-2,4-di-tert.-butyl-phenylester-dichlorid wurden ca. 96 g gelbliches Harz mit einem Gehalt von 63% -chlorid

$$[^{31}P\text{-NMR: } \delta_{CDCl_3} = 170{,}0 \text{ ppm}],$$

sowie 24% -bromid

$$[^{31}P\text{-NMR: } \delta_{CDCl_3} = 174{,}7 \text{ ppm}]$$

erhalten.
$C_{22}H_{30}ClOP$ (376,90); $C_{22}H_{30}BrOP$ (421,35)

7. 4-Methyl-1-naphthyl-phosphonigsäure-2',4'-di-tert.-butyl-phenylester-chlorid/bromid: Ausgehend von 55,3 g 1-Brom-4-methylnaphthalin und 77 g Phosphorigsäure-2,4-di-tert.-butyl-phenylester-dichlorid wurden ca. 100 g gelbliches Harz mit einem Gehalt von 65% -chlorid

$$[^{31}P\text{-NMR: } \delta_{CDCl_3} = 171{,}6 \text{ ppm}],$$

sowie 25% -bromid

$$[^{31}P\text{-NMR: } \delta_{CDCl_3} = 174{,}7 \text{ ppm}]$$

erhalten.

$C_{25}H_{30}ClOP$ (412,93); $C_{25}H_{30}BrOP$ (457,38)

8. 1-Naphthylphosphonigsäure-2' 4,-di-tert.-butyl-phenylester-bromid: Ausgehend von 51,8 g 1-Bromnaphthalin und 99 g Phosphorigsäure-2,4-di-tert.-butyl-phenylester-dibromid wurden ca. 110 g beiges Harz mit einem Gehalt von 88 % an vorstehender Verbindung erhalten

$$[^{31}P\text{-NMR: } \delta_{CDCl_3} : 173{,}2 \text{ ppm}].$$

$C_{24}H_{28}BrOP$ (443,37)

9. 2,4,6-Trimethyl-1-phenyl-phosphonigsäure-2',4'-di-tert.-butyl-phenylester-bromid: Ausgehend von 49,7 g Brommesitylen und 99 g Phosphorigsäure-2,4-di-tert.-butyl-phenylester-dibromid wurden ca. 108 g gelbes, zähes Öl mit einem Gehalt von 92 % an vorstehender Verbindung erhalten

$$[^{31}P\text{-NMR: } \delta_{CDCl_3} = 185{,}2 \text{ ppm}].$$

$C_{23}H_{32}BrOP$ (435,37)

Beispielhafte Folgeumsetzungen der erfindungsgemäßen Phosphonigsäure-arylester-halogenide I mit sekundären Aminen zu Phosphonigsäure-arylester-amiden, bzw. mit Phenolen zu Phosphonigsäure-diarylestern:

Allgemeine Arbeitsvorschrift: Zu der bei -10 bis -5 ° C unter Feuchtigkeitsausschluß und Stickstoffatmosphäre gerührten Lösung von ca. 240 mmol des betreffenden Phosphonigsäure-arylester-halogenids bzw. halogenidgemisches in 250 ml Toluol wurde innerhalb von 20 Minuten die Lösung von 240 mmol des betreffenden Amins bzw. Phenols und 24,3 g (= 240 mmol) Triäthylamin in 100 ml Toluol zugetropft. Anschließend wurde noch 4 Stunden bei Raumtemperatur nachgerührt und dann vom ausgefallenen Ammoniumsalz abfiltriert, das mit wenig Toluol nachgewaschen wurde. Aus dem Filtrat wurde das Lösungsmittel zunächst im Vakuum der Wasserstrahlpumpe und dann im Hochvakuum entfernt. Die verbleibenden rohen Reaktionsprodukte wurden zunächst durch $^{31}$P-NMR-Spektroskopie charakterisiert und dann durch Kristallisation gereinigt.

1. 2,4,6-Trimethyl-1-phenyl-phosphonigsäure-(2',4'-di-tert.-butyl-phenylester)-morpholid: Ausgehend von 96 g Rohprodukt gemäß Beispiel 1 und 20,9 g Morpholin wurden ca. 105 g gelbliches Harz mit einem Gehaltvon ca. 94 % an vorstehender Verbindung erhalten. Kristallisieren aus Acetonitril lieferte farblose Kristalle von Schmp. 85-87 ° C.

Analog wurde aus 104,5 g Rohprodukt gemäß Beispiel 9 ein gelbliches Harz mit einem Gehalt von 90 % an vorstehender Verbindung erhalten.

2. 2,4,5-Trimethyl-1-phenyl-phosphonigsäure-bis-(2',4'-di-tert`-butyl-phenylester)-morpholid: Ausgehend von 96,5 g Rohprodukt gemäß Beispiel 2 und 20,9 g Morpholin wurden ca. 103 g gelbliches Harz mit einem Gehalt von ca. 84 % an vorstehender Verbindung erhalten. Kristallisieren aus Acetonitril lieferte farblose Kristalle vom Schmp. 132-133 ° C.

3. 1-Naphthyl-phosphonigsäure-(2',4'-di-tert.-butyl-phenylester)-homopiperidid: Ausgehend von 100 g Rohprodukt gemäß Beispiel 3 und 23,8 g Hexamethylenimin wurden ca. 107 g beiges Harz mit einem Gehalt von 87 % an vorstehender Verbindung erhalten. Kristallisieren aus Acetonitril lieferte farblose Kristalle vom Schmp. 111-113 ° C.

4. 1-Naphthyl-phosphonigsäure-bis-(2',4'-di-tert.-butyl-phenyl)-ester: Ausgehend von 106,5 g Rohprodukt gemäß Beispiel 8 sowie 49,5 g 2,4-Di-tert.-butyl-phenol wurden ca. 135 g beiges Harz mit einem Gehalt von 88 % an vorstehender Verbindung erhalten. Kristallisieren aus Acetonitril/Aceton (5:1) lieferte farblose Kristalle vom Schmp. 125-127 ° C.

## Patentansprüche

**1.** Verfahren zur Herstellung von Phosphonigsäurearylester-halogeniden der Formel I

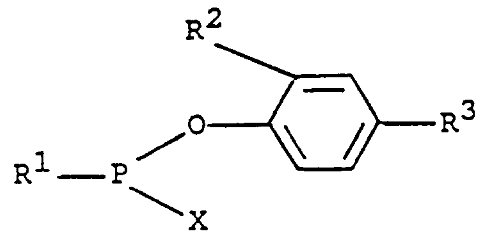

(I)

worin $R^1$ einen Phenyl- oder Benzylrest, die 1 bis 3 Substituenten tragen, α-Methylbenzyl, α,α-Dimethylbenzyl, Naphthyl oder einen 1 bis 5 Substituenten tragenden Naphthylrest darstellt, wobei die Substituenten gleich oder verschieden sind und einen nicht-aromatischen Kohlenwasserstoffrest, einen Alkoxyrest oder Alkylthiorest mit jeweils 1 bis 8 Kohlenstoffatomen, Aryl oder Aryloxy mit jeweils 6 bis 10 Kohlenstoffatomen oder Halogen mit einer Ordnungszahl von 9 bis 35,
$R^2$ einen nicht-aromatischen Kohlenwasserstoffrest mit 1 bis 18 Kohlenstoffatomen, Aryl, Arylmethyl, Aryläthyl oder Arylisopropyl ist, wobei das Aryl jeweils 6 bis 10 Kohlenstoffatome enthält,
$R^3$ Wasserstoff oder eine der unter $R^2$ genannten Gruppen, und
X Chlor oder Brom darstellt,
dadurch gekennzeichnet, daß man in einer ersten Stufe ein Kohlenwasserstoffhalogenid $R^1$-Hal, worin $R^1$ die obengenannte Bedeutung hat, und dessen Halogen ein Atomgewicht von mindestens 35 hat unter Grignard-Bedingungen mit mindestens stöchiometrischen Mengen Magnesium zu den entsprechenden Grignard-Verbindungen $R^1$-Mg-Hal umsetzt und diese weiter in einer zweiten Stufe mit Phosphorigsäure-arylester-dihalogeniden der Formel II

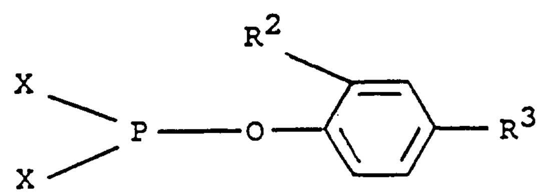

(II)

worin die Reste $R^2$ und $R^3$ und X die vorgenannte Bedeutung haben, unter Bildung der Phosphonigsäure-arylester-halogenide I umsetzt.

**2.** Verfahren nach Anspruch 4, dadurch gekennzeichnet, daß das Halogen in dem Kohlenwasserstoffhalogenid Brom ist.

## Claims

**1.** A process for the preparation of an aryl ester of a phosphonous halide of the formula I

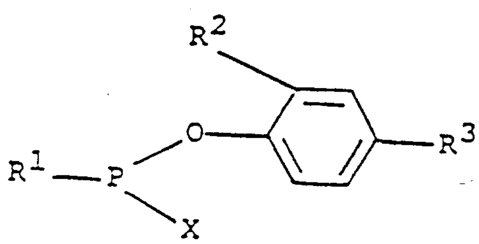

(I)

in which
$R^1$ is a phenyl or benzyl radical which bears 1 to 3 substituents, α-methylbenzyl, α,α-dimethylbenzyl, naphthyl or a naphthyl radical bearing 1 to 5 substituents, where the substituents are identical or

different and are a non-aromatic hydrocarbon radical, an alkoxy radical or alkylthio radical each having 1 to 8 carbon atoms, aryl or aryloxy each having 6 to 10 carbon atoms or halogen having an atomic number from 9 to 35,
$R^2$ is a non-aromatic hydrocarbon radical having 1 to 18 carbon atoms, aryl, arylmethyl, arylethyl or arylisopropyl, where each aryl contains 6 to 10 carbon atoms,
$R^3$ is hydrogen or one of the groups mentioned under $R^2$,
and
X is chlorine or bromine,
which comprises, in a first step, reacting a hydrocarbon halide $R^1$-Hal, in which $R^1$ has the abovementioned meaning and its halogen has an atomic weight of at least 35, with at least a stoichiometric amount of magnesium under Grignard conditions to give the corresponding Grignard compound $R^1$-Mg-Hal and, in a second step, further reacting this with the aryl ester of the phosphorous dihalide of the formula II

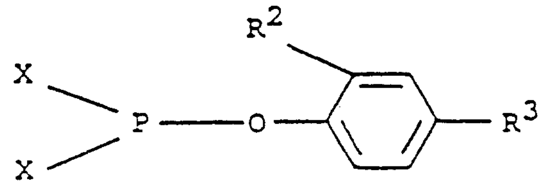

(II)

in which the radicals $R^2$ and $R^3$ and X have the abovementioned meaning, with the formation of the aryl ester of the phosphonous halide I.

2. The process as claimed in claim 1, wherein the halogen in the hydrocarbon halide is bromine.

**Revendications**

1. Procédé de préparation d'esters aryliqueshalogénures de l'acide phosphoneux répondant à la formule (I) :

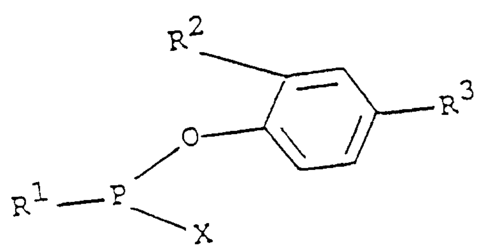

(I)

dans laquelle $R^1$ est un radical phényle ou benzyle portant 1 à 3 substituants, $\alpha$-méthylbenzyle, $\alpha,\alpha$-diméthylbenzyle, naphtyle ou un radical naphtyle portant 1 à 5 substituants, les substituants étant identiques ou différents, et un radical hydrocarboné non aromatique, un radical alcoxy ou un radical alkylthio ayant chacun 1 à 8 atomes de carbone, un radical aryle ou aryloxy ayant chacun 6 à 10 atomes de carbone ou un atome d'halogène ayant un nombre atomique de 9 à 35,
$R^2$ est un radical hydrocarboné non aromatique en $C_1$-$C_{18}$,aryle, arylméthyle, aryléthyle ou arylisopropyle, le groupe aryle ayant à chaque fois 6 à 10 atomes de carbone,
$R^3$ est un atome d'hydrogène ou un des groupes indiqués à propos de $R^2$ et
X représente un atome de chlore ou de brome,
caractérisé en ce qu'on fait réagir dans un premier stade un halogénohydrocarbure $R^1$-Hal, dans lequel $R^1$ a la signification indiquée ci-dessus, et dont l'atome d'halogène a un poids atomique d'au moins 35, dans les conditions de Grignard avec des quantités au moins stoechiométriques de magnésium pour donner les réactifs de Grignard $R^1$-Mg-Hal correspondants, et on fait encore réagir ceux-ci dans un second stade avec des esters aryliques-dihalogénures de l'acide phosphoreux répondant à la formule (II) :

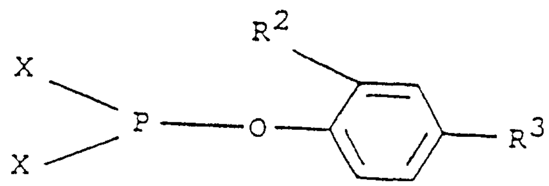

(II)

dans laquelle les radicaux $R^2$, $R^3$ et X ont la signification précédente, avec formation d'esters aryliques-halogénures de l'acide phosphoneux I.

2. Procédé selon la revendication 1, caractérisé en ce que l'halogène de l'halogénohydrocarbure est le brome.